# EUROPEAN PATENT APPLICATION

(11) **EP 4 700 505 A1**
(43) Date of publication of application: **25.02.2026**
(21) Application number: 24792474.9
(22) Date of filing: 01.04.2024
(51) Int. Cl.: G05B 19/05, G06F 11/32, G06F 11/36

(54) **INFORMATION PROCESSING SYSTEM, INFORMATION PROCESSING METHOD, AND PROGRAM**

(30) Priority: 19.04.2023 JP 2023068401
(71) Applicant: Omron Corporation, Kyoto-shi, Kyoto 600-8530 (JP)
(72) Inventor: TAMASHIMA, Daisuke, Kyoto-shi, Kyoto 600-8530 (JP); SHIGEMORI, Yutsuka, Kyoto-shi, Kyoto 600-8530 (JP); OHNUKI, Haruna, Kyoto-shi, Kyoto 600-8530 (JP); MANABE, Mikiko, Kyoto-shi, Kyoto 600-8530 (JP)
(74) Representative: Mewburn Ellis LLP
(86) International application number: PCT/JP2024/013431
(87) International publication number: WO 2024/219198

(57) **Abstract**

A reproduction module sequentially reproduces a variable value held in a PLC for each control cycle of the PLC in a target period based on a time-series dataset recorded by the PLC in the target period. One or more visualization modules each visualize the reproduced variable value as a visualization-target variable value representing a control state of the PLC. The time-series dataset indicates a variable value for each control cycle in the target period. The reproduction module has a data type memory map representing: a size of a data type of a variable used by a control program executed by the PLC; a size of a data type of each array element in an array or each member in a structure; and arrangement information of an array element or a member. The reproduction module reproduces, by using the data type memory map, the variable value held in the PLC.

## Description

### TECHNICAL FIELD

The present disclosure relates to an information processing system, an information processing method, and a program.

### BACKGROUND ART

In order to investigate the cause of an abnormal operation of production equipment, a development has been under way for implementing a technology for recording time-series data collected in a programmable logic controller (PLC) that controls the production equipment and visualizing the recorded time-series data.

For example, Japanese Patent Laying-Open No. 2020-13528 (PTL 1) discloses an engineering tool having: storage means for storing a plurality of time-series device values collected in a PLC; and a plurality of software modules for visualizing the device values.

### CITATION LIST

### PATENT LITERATURE

PTL 1: Japanese Patent Laying-Open No. 2020-13528

### SUMMARY OF INVENTION

### TECHNICAL PROBLEM

In a PLC, a "variable programming method" for allocating values of a control input/output, an internal process, and an internal state to variables is currently adopted as a mainstream method in place of an "address programming method" for allocating values of the control input/output, the internal process, and the internal state to a PLC-specific memory map.

For the PLC adopting the address programming method, there has been proposed a solution by which a storage is configured to store values in a memory map that change from moment to moment during execution of a control program by the PLC, and an engineering tool reads data in the storage to reproduce the input/output state and the internal state of a past control program in the PLC for supporting an abnormality analysis.

On the other hand, it is difficult to apply the above-described solution to the PLC adopting the variable programming method. This is because the engineering tool cannot reproduce the memory map existing in the PLC. Specifically, this is because the engineering tool receives a time-series memory map from the PLC but cannot acquire, from the variables used by the control program, the start address of a memory area storing the values of the variables. Thus, the engineering tool cannot specify the values of the variables from the memory map and consequently cannot reproduce the past control state of the PLC.

The present disclosure has been made in view of the above-described problem, and an object thereof is to provide an information processing system, an information processing method, and a program that allow reproduction of a past control state of a PLC that adopts a variable programming method.

### SOLUTION TO PROBLEM

According to an example of the present disclosure, an information processing system includes a reproduction module and one or more visualization modules. The reproduction module is configured to sequentially reproduce a variable value held in a programmable logic controller for each control cycle of the programmable logic controller in a target period based on a time-series dataset recorded by the programmable logic controller in the target period. The one or more visualization modules are each configured to visualize, as a visualization-target variable value, the variable value reproduced by the reproduction module, the visualization-target variable value representing a control state of the programmable logic controller. The time-series dataset indicates the variable value for each the control cycle in the target period. The reproduction module has a data type memory map representing: a size of a data type of a variable used by a control program executed by the programmable logic controller; a size of a data type of each array element in an array or each member in a structure; and arrangement information of an array element or a member. The reproduction module is configured to reproduce, by using the data type memory map, the variable value held in the programmable logic controller.

According to the present disclosure, since the time-series dataset is generated by recording the variable values held in the memory of the programmable logic controller in the target period, the reproduction module can acquire the variable value for each control cycle in the target period. Further, since the data type memory map is used to specify the start address and the size of any member or any array element of a structure variable or an array variable, the value of the visualization-target member or the visualization-target array element can be reproduced. Therefore, the past control state of the PLC adopting the variable programming method can be reproduced.

In the above disclosure, the reproduction module is configured to extract data corresponding to a target time in the target period from the time-series dataset, and reproduce a value of a structure variable held in the programmable logic controller at the target time based on the extracted data. The reproduction module is configured to specify a start address and a size of a visualization-target member in the structure by using the data type memory map, to reproduce a value of the visualization-target member from the reproduced value of the structure variable.

According to the present disclosure, the values of the structure variables are recorded in the time-series dataset by the programmable controller, and thereby, the reproduction module can reproduce the value of the visualization-target member from the values of the structure variables by using the data type memory map of the structure. This eliminates the need for the programmable logic controller to record the variable values in units of members of the structure, which makes it possible to suppress reduction in capacity of the storage and to suppress any influence exerted on execution of the control program.

In the above disclosure, the reproduction module is configured to extract data corresponding to a target time in the target period from the time-series dataset, and reproduce a value of an array variable held in the programmable logic controller at the target time based on the extracted data. The reproduction module is configured to specify a start address and a size of a visualization-target array element in an array by using the data type memory map, to reproduce a value of the visualization-target array element from the reproduced value of the array variable.

According to the present disclosure, the values of the array variables are recorded in the time-series dataset by the programmable controller, and thereby, the reproduction module can reproduce the value of the visualization-target array element from the values of the array variables by using the data type memory map of the array. This eliminates the need for the programmable logic controller to record the variable values in units of array elements, which makes it possible to suppress reduction in capacity of the storage and to suppress any influence exerted on execution of the control program.

In the above disclosure, the one or more visualization modules each have: a first mode for acquiring, as the visualization-target variable value, the variable value reproduced by the reproduction module; and a second mode for acquiring, as the visualization-target variable value, a variable value currently held in the programmable logic controller. The information processing system is configured to communicably connect the one or more visualization modules and the reproduction module in response to an instruction to start the first mode. The information processing system is configured to communicably connect the one or more visualization modules and the programmable logic controller in response to an instruction to start the second mode.

According to the present disclosure, a user can switch each of the variable values visualized by the one or more visualization modules between the variable value currently held in the programmable logic controller and the variable value in the target period that has been reproduced by the reproduction module.

According to another example of the present disclosure, an information processing method is applied in an information processing apparatus including one or more visualization modules each configured to visualize a visualization-target variable value representing a control state of a programmable logic controller. The information processing method includes: sequentially reproducing a variable value held in the programmable logic controller for each control cycle of the programmable logic controller in a target period based on a time-series dataset recorded by the programmable logic controller in the target period; and sending the reproduced variable value to the one or more visualization modules as the visualization-target variable value. The time-series dataset indicates the variable value for each the control cycle in the target period. The information processing apparatus has a data type memory map representing: a size of a data type of a variable used by a control program executed by the programmable logic controller; and a size of a data type and arrangement information of an array element in an array variable or a member in a structure variable. The sequentially reproducing a variable value includes reproducing, by using the data type memory map, the variable value held in the programmable logic controller.

According to still another example of the present disclosure, a program causes a computer to execute the above-described information processing method.

Also according to the above disclosures, the past control state of the PLC adopting the variable programming method can be reproduced.

### ADVANTAGEOUS EFFECTS OF INVENTION

According to the present disclosure, the past control state of the PLC adopting the variable programming method can be reproduced.

### BRIEF DESCRIPTION OF DRAWINGS

Fig. 1 is a diagram schematically illustrating an example of a manufacturing system to which an information processing system according to an embodiment is applied.
Fig. 2 is a schematic diagram showing an example of an overall configuration of the manufacturing system according to the embodiment.
Fig. 3 is a schematic diagram showing an example of a hardware configuration of a PLC according to the embodiment.
Fig. 4 is a block diagram showing an example of a software configuration of a PC and the PLC.
Fig. 5 is a diagram for explaining a time-series dataset generated by the PLC.
Fig. 6 is a diagram showing an example of a BOOL-type data type memory map.
Fig. 7 is a diagram showing an example of a data type memory map of a structure.
Fig. 8 is a diagram showing a first example of a process of reproducing a variable value by a reproduction PLC.
Fig. 9 is a diagram showing a second example of the process of reproducing a variable value by the reproduction PLC.
Fig. 10 is a sequence diagram showing a flow of a process of reproducing a value of a variable S1.m8[3] shown in Fig. 9.
Fig. 11 is a diagram showing a display example of reproduction data in a playback mode.

### DESCRIPTION OF EMBODIMENTS

Embodiments of the present disclosure will be described in detail with reference to the accompanying drawings. The same or corresponding portions in the drawings are denoted by the same reference characters, and the description thereof will not be repeated. In the present specification, the term "or" includes the meaning of "and" in addition to the meaning of "or" unless otherwise specified.

### §1 Application Examples

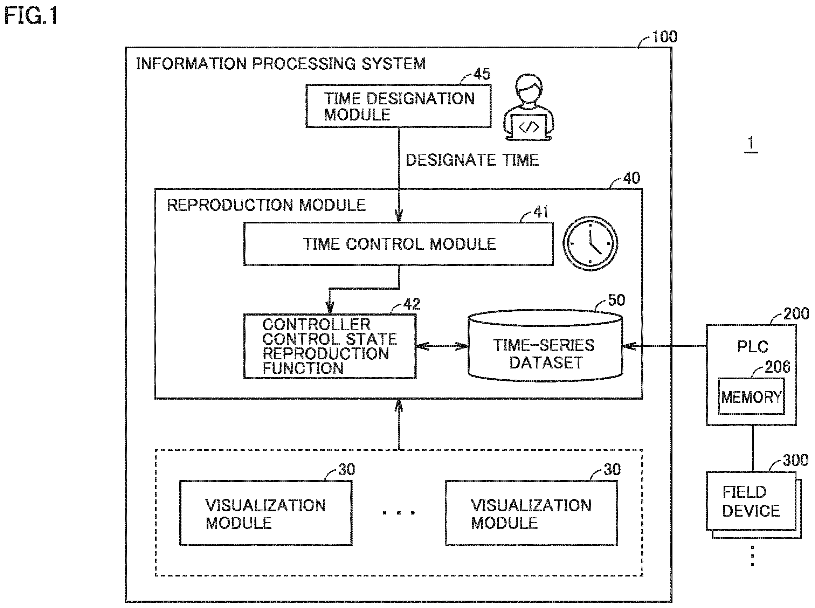

Fig. 1 is a diagram schematically illustrating an example of a manufacturing system to which an information processing system according to an embodiment is applied. As shown in Fig. 1, a manufacturing system 1 includes an information processing system 100, a programmable logic controller 200 (hereinafter referred to as a "PLC 200"), and one or more field devices 300.

PLC 200 is connected to one or more field devices 300, and controls one or more field devices 300 according to a control program created in advance. Each of one or more field devices 300 includes: an actuator that exerts some physical action on production equipment, a production line, or the like (hereinafter also collectively referred to as a "field"); various sensors installed in the field; an input/output device that exchanges information with the field; or the like.

PLC 200 includes a memory 206 that holds various variable values exchanged with one or more field devices 300. The variable values held in memory 206 include: various state values indicating the states of one or more field devices 300; and various command values to be output to one or more field devices 300. PLC 200 updates the variable values held in memory 206 in a control cycle in the order of several hundred µsec to the order of several dozen msec.

PLC 200 generates a time-series dataset 50 by recording the variable values held in memory 206 in the target period. The generated time-series dataset 50 is moved to information processing system 100. How to move time-series dataset 50 from PLC 200 to information processing system 100 is not particularly limited, but time-series dataset 50 is moved by using a storage medium such as a memory card.

Information processing system 100 is constituted of one or more computers. Information processing system 100 includes one or more visualization modules 30, a reproduction module 40, and a time designation module 45.

One or more visualization modules 30 each visualize, on a screen, a visualization-target variable value representing the control state of PLC 200. For example, one or more visualization modules 30 include a visualization module that generates screen data showing a screen that includes a graph indicating transition of each visualization-target variable value. Alternatively, one or more visualization modules 30 may include a visualization module that generates screen data showing a screen on which visualization-target variable values are described on a ladder diagram representing a control program.

Based on time-series dataset 50 recorded by PLC 200 in the target period, reproduction module 40 sequentially reproduces the variable values held in PLC 200 for each control cycle in the target period. Hereinafter, the data indicating the variable value reproduced by reproduction module 40 is referred to as "reproduction data".

Reproduction module 40 includes a time control module 41 and a controller control state reproduction function 42.

Time control module 41 controls the target time in the target period at which the variable value is to be reproduced. Time control module 41 updates the target time every prescribed time period based on a replay start point and a replay condition received from time designation module 45. The replay start point indicates one time belonging to the target period. The replay condition indicates a replay speed or the like, and defines the above-mentioned prescribed time period.

Controller control state reproduction function 42 extracts data corresponding to the target time from time-series dataset 50 every prescribed time period, and, based on the extracted data, generates reproduction data indicating the variable value held in PLC 200 at the target time.

Time designation module 45 determines the replay start point and the replay condition in response to a user input, and outputs the determined replay start point and replay condition to reproduction module 40.

One or more visualization modules 30 each have a first mode (hereinafter referred to as a "playback mode") for acquiring, as a visualization-target variable value, a variable value indicated by the reproduction data. Thereby, when a new visualization module is added, the user should only set this new visualization module such that the variable value reproduced by reproduction module 40 can be acquired as a visualization-target variable value, but the user does not need to modify existing visualization module 30. Thus, the user can easily add a new visualization module.

### §2 Specific Examples

### <Overall Configuration of Manufacturing System>

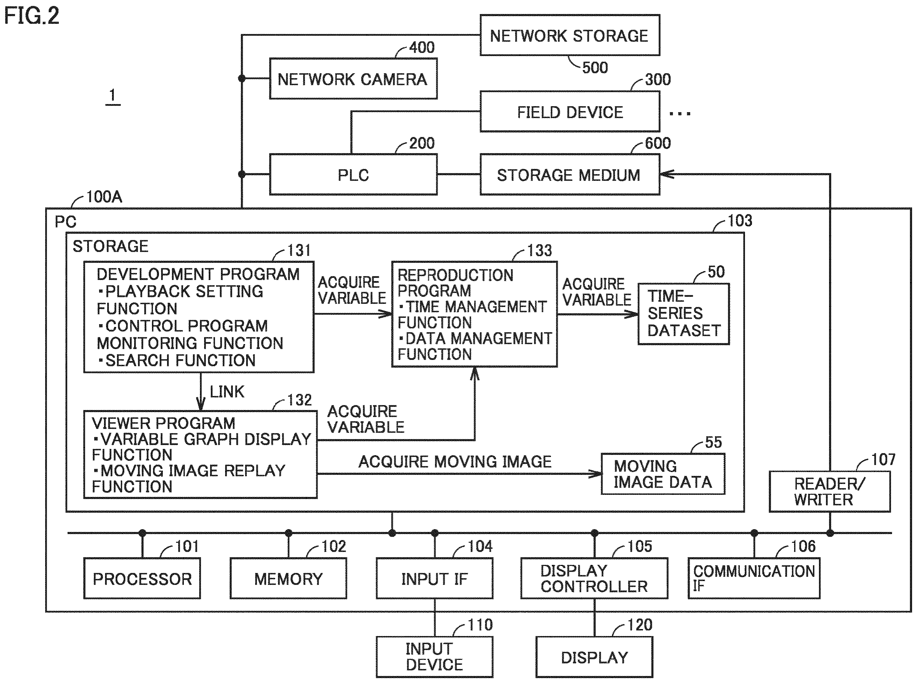

Fig. 2 is a schematic diagram showing an example of an overall configuration of the manufacturing system according to the embodiment. As shown in Fig. 2, manufacturing system 1 includes a personal computer (hereinafter referred to as a "PC 100A") constituting information processing system 100, PLC 200, one or more field devices 300, a network camera 400, a network storage 500, and a storage medium 600. PC 100A, PLC 200, network camera 400, and network storage 500 can communicate with each other, for example, through general-purpose Ethernet (registered trademark). PC 100A and PLC 200 may communicate with each other through another communication means (e.g., a universal serial bus (USB)).

Network camera 400 is installed in a field and photographs at least some of one or more field devices 300.

Network storage 500 stores a group of moving image data generated by photographing by network camera 400.

Storage medium 600 is used for transferring time-series dataset 50 from PLC 200 to PC 100A. Storage medium 600 includes a volatile storage medium, a non-volatile storage medium, a general-purpose semiconductor storage device such as a compact flash (CF) device or a secure digital (SD) device, a magnetic storage medium such as a flexible disk, or an optical storage medium such as a compact disk read only memory (CD-ROM).

PC 100A is typically a computer having a general-purpose architecture. As shown in Fig. 2, PC 100A includes: a processor 101 such as a central processing unit (CPU) or a micro processing unit (MPU); a memory 102 configured of a volatile storage device such as a dynamic random access memory (DRAM) or a static random access memory (SRAM); a storage 103 configured of a non-volatile storage device such as a hard disk drive (HDD) or a solid state drive (SSD); an input interface 104; a display controller 105; a communication interface 106; and a reader/writer 107. These components are connected to each other via a bus so as to allow data communication therebetween.

Processor 101 reads a program stored in storage 103 and deploys the program in memory 102. Processor 101 executes the deployed program.

Storage 103 stores programs executed by processor 101, time-series dataset 50 taken out from PLC 200 through storage medium 600, and moving image data 55 acquired from network storage 500.

Storage 103 stores a development program 131, a viewer program 132, and a reproduction program 133.

Development program 131 mainly supports development of the control program used by PLC 200. Further, development program 131 provides: a setting function related to the playback mode; a function of monitoring the status of execution of the control program by PLC 200 (hereinafter referred to as a "control program monitoring function"); and a search function. In the playback mode, the control program monitoring function includes a function of acquiring reproduction data (data indicating the reproduced variable value) obtained by executing reproduction program 133. The search function includes, for example, a function of searching for the timing at which a designated variable changes in the status of execution of the control program by PLC 200.

Viewer program 132 is a program for visualizing various pieces of information and providing the visualized information to the user. Viewer program 132 provides: a function of displaying a variable graph showing transitions of various variable values (hereinafter referred to as a "variable graph display function"); and a function of replaying an operation presented by moving image data 55. In the playback mode, the variable graph display function includes a function of acquiring a variable value obtained by execution of reproduction program 133.

Viewer program 132 is, for example, a dynamic link library (DLL) file and, upon activation of development program 131, is linked to development program 131 and deployed in memory 102.

Reproduction program 133 reproduces the past control state of PLC 200. Reproduction program 133 provides: a function of managing the target time at which the control state is reproduced; and a function of managing time-series data (hereinafter referred to as a "data management function"). The data management function includes a function of acquiring data from time-series dataset 50.

Input interface 104 mediates transmission of data between processor 101 and an input device 110 such as a keyboard, a mouse, or a touch panel. Display controller 105 is connected to a display 120 and causes display 120 to show a screen represented by the screen data generated by processor 101. Communication interface 106 communicates with PLC 200 and network storage 500 via a communication network. Reader/writer 107 mediates transmission of data between processor 101 and external storage medium 600.

Each of development program 131, viewer program 132, and reproduction program 133 may not be provided as a single program but may be incorporated into a part of any program. In this case, the process according to the present embodiment is implemented in cooperation with any program. Further, some or all of the functions provided by development program 131, viewer program 132, and reproduction program 133 may be implemented by a dedicated hardware circuit (for example, an application specific integrated circuit (ASIC) or a field-programmable gate array (FPGA)).

### <Hardware Configuration of PLC>

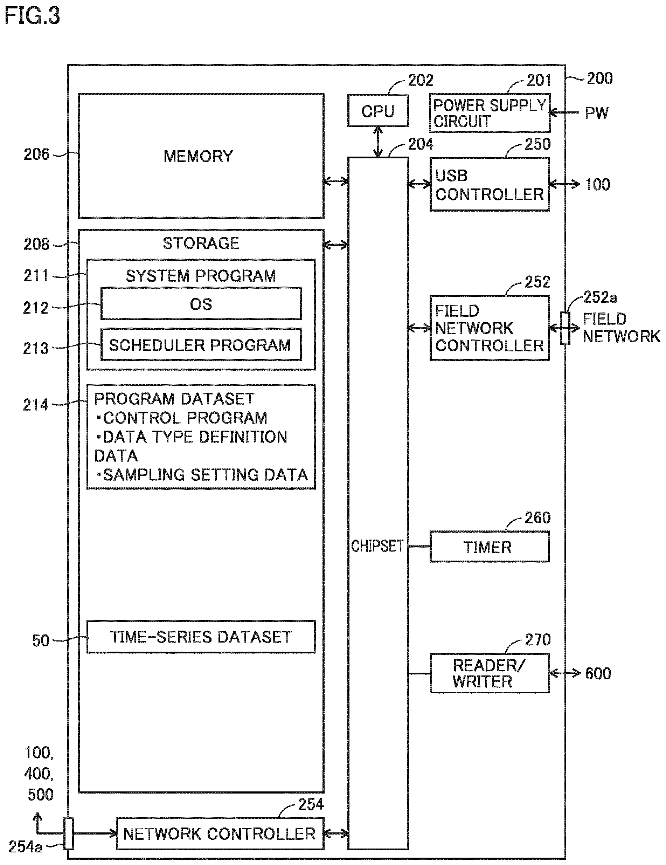

Fig. 3 is a schematic diagram showing an example of a hardware configuration of the PLC according to the embodiment. As shown in Fig. 3, PLC 200 includes, as main components, a power supply circuit 201 that supplies electric power PW to each part of PLC 200, a CPU 202, a chipset 204, a memory 206, a storage 208, a USB controller 250, a field network controller 252, a network controller 254, a timer 260, and a reader/writer 270.

CPU 202 reads the program stored in storage 208 and deploys the program in memory 206. CPU 202 executes the deployed program.

Memory 206 is configured of a volatile storage device such as a DRAM or an SRAM. As described above, memory 206 holds various variable values including: a state value to be transferred from one or more field devices 300 to PLC 200; and a command value to be output to one or more field devices 300. CPU 202 executes the program stored in storage 208 to thereby update various variable values held in memory 206 according to a control cycle set in advance in accordance with the type of each of the variables.

Storage 208 is configured, for example, of a non-volatile storage device such as a hard disc drive (HDD), a solid state drive (SSD), or a flash memory, but a part thereof may be configured of a volatile storage.

Chipset 204 mediates exchange of data between CPU 202 and each component to implement a process as the entire PLC 200.

Storage 208 stores a system program 211 including an operating system (OS) 212 and a scheduler program 213 for implementing basic functions of PLC 200.

Further, storage 208 stores a program dataset 214 produced by PC 100A. Program dataset 214 includes a control program, data type definition data, and sampling setting data.

The control program defines: a process of collecting state values indicating the states of one or more field devices 300; and a process of generating command values to one or more field devices 300, the command values being generated by computation based on the collected state values. The variable values including the state values and the command values are temporarily stored in memory 206. Thus, CPU 202 executes the control program to thereby update the variable values held in memory 206.

The data type definition data defines the data type of each variable used by the control program. The "data type" is an attribute by which the format and the range of the value represented by each variable are specified. The variables used by the control program include a variable indicating the state of each of one or more field devices 300 and a variable to be output to one or more field devices 300.

The sampling setting data defines a generation condition for time-series dataset 50. The generation condition for time-series dataset 50 indicates a start condition for sampling, variables to be sampled, a sampling time period, and the like.

Further, storage 208 stores time-series dataset 50 generated according to the generation condition indicated by the sampling setting data.

USB controller 250 serves to exchange data with an external device (for example, PC 100A) through a USB connection.

Field network controller 252 has a connector 252a for connecting to a field network, and controls exchange of data between PLC 200 and one or more field devices 300 through the field network. Field network controller 252 has an internal buffer for storing: input data received from the field network; and output data to be output from PLC 200 to the field network.

Network controller 254 has a connector 254a for connecting to an upper network, and controls exchange of data between PLC 200 and an external device (for example, PC 100A, network camera 400, or network storage 500).

Timer 260 is configured to include a clock circuit or a counter circuit that measures time, but is not limited to such a circuit and may be configured of a software module executed by CPU 202.

Reader/writer 270 mediates transmission of data between CPU 202 and external storage medium 600.

Fig. 3 shows a configuration example in which CPU 202 executes a program to provide necessary functions, but some or all of the provided functions may be implemented using a dedicated hardware circuit (for example, an ASIC or an FPGA). Alternatively, main parts of PLC 200 may be implemented by hardware conforming to a general-purpose architecture (for example, an industrial personal computer based on a general-purpose personal computer). In this case, multi-core technology may be applied to perform processes in parallel. Alternatively, virtualization technology may be used to execute a plurality of OSs having different uses in parallel, and to execute a necessary application on each OS.

### <Functional Configuration>

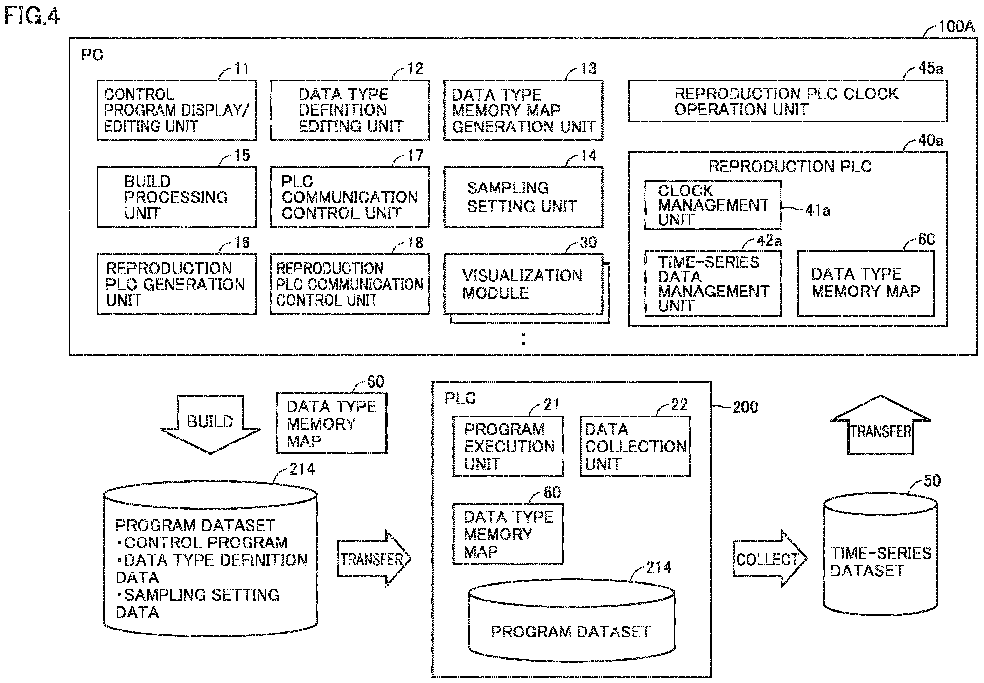

Fig. 4 is a block diagram showing an example of a software configuration of the PC and the PLC. As shown in Fig. 4, PC 100A includes a control program display/editing unit 11, a data type definition editing unit 12, a data type memory map generation unit 13, a sampling setting unit 14, a build processing unit 15, a reproduction PLC generation unit 16, a PLC communication control unit 17, a reproduction PLC communication control unit 18, one or more visualization modules 30, a reproduction PLC 40a, and a reproduction PLC clock operation unit 45a.

Control program display/editing unit 11, data type definition editing unit 12, data type memory map generation unit 13, sampling setting unit 14, build processing unit 15, and reproduction PLC generation unit 16 are implemented by execution of development program 131 by processor 101 shown in Fig. 2. PLC communication control unit 17 is implemented by processor 101 that executes development program 131 and also by communication interface 106. Reproduction PLC communication control unit 18, reproduction PLC 40a, and reproduction PLC clock operation unit 45a are implemented by execution of reproduction program 133 by processor 101. Reproduction PLC clock operation unit 45a is implemented by processor 101 that executes reproduction program 133 and also by input interface 104. Each of one or more visualization modules 30 is implemented by execution of development program 131 or viewer program 132 by processor 101.

Control program display/editing unit 11 creates or edits a source code of the control program in response to the user input. The control program is, for example, a ladder program but is not limited thereto. Further, control program display/editing unit 11 displays a ladder diagram representing the control program. The control program is described in a programming language in which a plurality of instruction elements connected to each other can be displayed. In response to the user input, control program display/editing unit 11 displays the control program in various scenes such as a phase in which the control program is created or edited, a phase in which the status of execution of the control program by PLC 200 is monitored in real time, and a phase in which the past control state of PLC 200 is reproduced by reproduction module 40.

In response to the user input, data type definition editing unit 12 edits the data type of each of the variables used by the control program. The variables used by the control program include variables collected from one or more field devices 300 and variables generated by execution of the control program (variables to be output to one or more field devices 300). Data type definition editing unit 12 generates data type definition data indicating the data type edited for each variable.

Data type memory map generation unit 13 generates a data type memory map 60 in response to the user input. Data type memory map 60 represents the size of the data type of each variable used by the control program. Regarding the variables each having the data type of the array or the structure, data type memory map 60 represents, in addition to the size of the data type of each variable, the size of the data type of each array element or each member, and arrangement information of the array elements or the members.

The array means that pieces of data having the same data type are arranged in a line. The variable having the data type of the array is referred to as an array variable. The structure is constituted of a group in which a plurality of pieces of data and a plurality of objects are ordered. Various data types can be adopted for the member, unlike the array. The variable having the data type of the structure is referred to as a structure variable.

By using data type memory map 60, the start address and the size of any array element in the array or any member in the structure are specified. As a result, the value of any array element or any member is specified from the array variable or the structure variable.

In response to the user input, sampling setting unit 14 sets the generation condition for time-series dataset 50, and generates sampling setting data indicating the set generation condition. As described above, the generation condition for time-series dataset 50 indicates the start condition for sampling, the variables to be sampled, the sampling time period, and the like. The start condition for sampling specifies, for example, that the value of the specific variable changes from the first value to the second value. When the start condition for sampling is satisfied, generation of time-series dataset 50 is started. The variables to be sampled are set from among a plurality of variables used by the control program. Note that all of the plurality of variables used by the control program may be set as targets to be sampled, or some of the plurality of variables used by the control program may be set as targets to be sampled. The sampling time period is a time period from the start to the end of generation of time-series dataset 50 and, for example, is 10 minutes but is not limited thereto.

Build processing unit 15 builds a source code of the control program and generates an object code from the source code. Build processing unit 15 transfers program dataset 214 including the control program of the generated object code to PLC 200. Program dataset 214 includes, in addition to the control program of the object code, the data type definition data generated by data type definition editing unit 12 and the sampling setting data generated by sampling setting unit 14. Further, data type memory map 60 generated by data type memory map generation unit 13 is also installed, together with program dataset 214, in PLC 200.

In response to the user input, reproduction PLC generation unit 16 invokes reproduction program 133 shown in Fig. 2 to generate reproduction PLC 40a and start the operation of reproduction PLC 40a.

One or more visualization modules 30 each visualize, on the screen, the visualization-target variable value representing the control state of PLC 200 as described above. In addition to the playback mode for acquiring a variable value reproduced by reproduction PLC 40a as a visualization-target variable value, one or more visualization modules 30 each have a second mode (hereinafter referred to as a "real-time mode") for acquiring a variable value currently held in PLC 200 as a visualization-target variable value.

PLC communication control unit 17 controls communication with PLC 200. In response to the user input for designating the start of the real-time mode, PLC communication control unit 17 communicably connects one or more visualization modules 30 to PLC 200.

In response to the user input for designating the start of the playback mode, reproduction PLC communication control unit 18 communicably connects one or more visualization modules 30 to reproduction PLC 40a.

Reproduction PLC 40a is an example of reproduction module 40 shown in Fig. 1, and sequentially reproduces the variable values held in PLC 200 for each control cycle in the target period based on time-series dataset 50 recorded by PLC 200 in the target period. Reproduction PLC 40a includes a clock management unit 41a and a time-series data management unit 42a corresponding to time control module 41 and controller control state reproduction function 42, respectively, shown in Fig. 1.

Clock management unit 41a manages a target counter value corresponding to the target time in the target period at which the variable value is to be reproduced. The target counter value represents the time period elapsed from the start of the target period. The target counter value indicates, for example, that the time period elapsed from the start of the target period is how many times as large as the control cycle.

Clock management unit 41a starts and stops updating the target counter value in response to an instruction from reproduction PLC clock operation unit 45a. Specifically, upon receipt of an instruction to start replay from reproduction PLC clock operation unit 45a, clock management unit 41a sets the replay start counter value designated by reproduction PLC clock operation unit 45a as a target counter value, and then adds 1 to the target counter value each time a prescribed time period elapses. Clock management unit 41a sets the prescribed time period according to the replay condition designated by reproduction PLC clock operation unit 45a.

Time-series data management unit 42a extracts the data at the target time corresponding to the target counter value from time-series dataset 50, and, based on the extracted data, reproduces the variable value held in memory 206 of PLC 200 at the target time. Specifically, time-series data management unit 42a reads each value of the array element of the array variable or the member of the structure variable by using data type memory map 60.

Reproduction PLC clock operation unit 45a is an example of time designation module 45 shown in Fig. 1. In response to the user input, reproduction PLC clock operation unit 45a sets a replay start counter value and a replay condition, and outputs the set replay start counter value and replay condition to reproduction PLC 40a.

As shown in Fig. 4, PLC 200 includes a program execution unit 21 and a data collection unit 22. Further, PLC 200 stores program dataset 214 and data type memory map 60 that have been transferred from PC 100A. Program execution unit 21 and data collection unit 22 are implemented by execution of the control program included in program dataset 214 by CPU 202 shown in Fig. 3.

Program execution unit 21 collects the state values indicating the states of one or more field devices 300, and generates command values for one or more field devices 300 by computation based on the collected state values.

Program execution unit 21 updates the variable values held in memory 206 shown in Fig. 3 according to a predetermined control cycle. When updating each variable value held in memory 206, program execution unit 21 updates each bit in a memory area storing each variable value according to the data type definition data included in program dataset 214. Further, for the array variable or the structure variable, program execution unit 21 updates each bit in the memory area storing the value of each array element or each member according to data type memory map 60 of the variable.

For the variable used for computation, according to the data type definition data, program execution unit 21 reads the variable value from each bit value in the memory area that corresponds to the variable. Further, for the array variable or the structure variable, program execution unit 21 reads the value of the array element or the member by using data type memory map 60 of the variable.

Data collection unit 22 generates time-series dataset 50 according to the generation condition (including the start condition for sampling, the variables to be sampled, and the sampling time period) indicated by the sampling setting data included in program dataset 214. Specifically, upon satisfaction of the start condition for sampling, data collection unit 22 starts recording the variable values held in memory 206 regarding the variables to be sampled. When the sampling time period has elapsed from the start of recording of the variable values, data collection unit 22 ends the recording of the variable values, and generates time-series dataset 50 indicating the variable value at each time in the target period from the start to the end of the recording. Time-series dataset 50 is transferred from PLC 200 to PC 100A.

### <Time-Series Dataset 50>

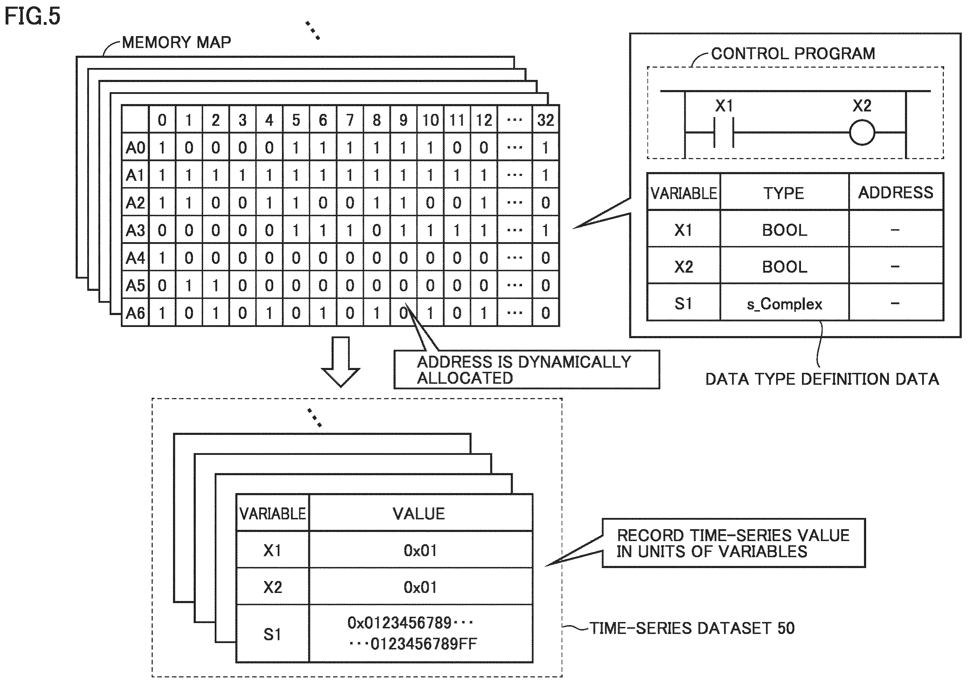

Fig. 5 is a diagram for explaining time-series dataset 50 generated by PLC 200.

The control program executed by PLC 200 is described by a variable programming method. The source code of the control program can be described typically in any language such as Ladder Diagram (LD), Instruction List (IL), Structured Text (ST), Function Block Diagram (FBD), or Sequential Function Chart (SFC), which are defined in IEC61131-3.

The source code is described using a variable in any language. The "variable" is an identifier given to data processed in the control program. Typically, the "variable" is data representing the state of PLC 200 or the state of the target (one or more field devices 300) to be controlled by PLC 200. In other words, the "variable" refers to data whose value changes from moment to moment in conjunction with the state of PLC 200 or the state of the target to be controlled. The concept of the "variable" may include data representing one value, data represented as an array, data appearing as a structure, and various pieces of data defined in a control program.

Fig. 5 shows an example of a ladder circuit described by a ladder program that is an example of a control program. The ladder circuit includes: a contact that is turned ON/OFF according to the value of a variable X1; and a coil that outputs a result of ON/OFF as a variable X2. The ladder circuit is described by connecting circuit elements such as contacts and coils to each other by connection lines. A hierarchical combination in the ladder circuit allows for description of a process for PLC 300 to control a target to be controlled (one or more field devices 300).

The data type definition data is generated by data type definition editing unit 12 of PC 100A and transferred to PLC 200. The data type definition data is generated by declaring, for each variable, at least a variable name and a data type of the variable. The data type is selectively set from among "BOOL", "REAL", "INT", "DINT", and the like that are defined in advance. When the source code of the control program is built, a memory area having a capacity according to the selected data type is ensured for each of the variables declared in the data type definition data.

However, in the case of the variable programming method, an address in the memory area does not need to be allocated to each variable except when an absolute address for an input/output signal or the like to be connected to an external device is required. Thus, in the data type definition data, an address as an allocation destination is not designated for each variable. In this respect, the variable programming method is different from the address programming method by which a PLC-specific address is designated for the data representing the state of the PLC or the state of the target to be controlled. Thereby, as compared with the address programming method, the variable programming method eliminates the need to manage the address at the time of modification or model change of the PLC, and thus facilitates transfer of the control program between the PLCs. Further, giving an easily understandable variable name allows an improvement in readability of the control program.

On the other hand, in the memory map in memory 206 of PLC 200, the address to be allocated to each variable value is dynamically determined in the stage in which the variable is set in PLC 200. Thus, it is impossible for PC 100A to know, in advance, the address in the memory area in which each variable value is stored. Thereby, even if the time-series memory map in the target period is provided from PLC 200, reproduction PLC 40a cannot reproduce the variable value.

Thus, in the present embodiment, PLC 200 generates time-series dataset 50 in which the time-series values are recorded in units of variables. As shown in Fig. 5, the variable values held in memory 206 in the target period are recorded in time-series dataset 50. Regarding the structure variable and the array variable, the values of the entire variables are recorded in time-series dataset 50 by PLC 200.

### <Data Type Memory Map 60>

As described above, regarding the structure variable and the array variable, the values of the entire variables are recorded as one variable value in time-series dataset 50, and therefore, this one variable value itself has no meaning. Thus, from this variable value, the value of each member in the structure or the value of each array element in the array cannot be specified.

In the above case, it is conceivable to configure time-series dataset 50 to record the value of each member in the structure and the value of each array element in the array. However, since the information for specifying each member or each array element needs to be recorded in storage 208 of PLC 200, there is a concern that the capacity of storage 208 is reduced with an increase in number of members or number of array elements. Further, since a process of recording an enormous number of variable values needs to be performed in each control cycle, there is a concern that the performance of PLC 200 may also be affected.

Thus, in the present embodiment, as shown in Fig. 4, reproduction PLC 40a is configured to have the same data type memory map 60 as data type memory map 60 included in PLC 200. Data type memory map 60 is generated by data type memory map generation unit 13 and installed in PLC 200 and reproduction PLC 40a. Data type memory map 60 represents the size of the data type of the variable used by the control program, the size of the data type of each array element in the array or each member in the structure, and the arrangement information of the array element or the member. Data type memory map 60 is generated for each data type.

Reproduction PLC 40a specifies the start address and the size of any member by using data type memory map 60 of the structure to specify the value of the member from the value of the structure variable. Further, reproduction PLC 40a specifies the start address and the size of any array element by using data type memory map 60 of the array to specify the value of the array element from the value of the array variable.

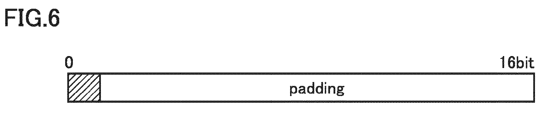

Fig. 6 is a diagram showing an example of a BOOL-type data type memory map.

As shown in Fig. 6, a memory area storing BOOL-type variables has a size of 2 bytes (16 bits). The first bit at the top is the address of the data. Thus, when PLC 200 updates the variable value held in memory 206, the first bit in the memory area (2 bytes) storing BOOL-type variable values is updated to a value of True or False according to data type memory map 60 in Fig. 6. The remaining 15 bits are meaningless data (hereinafter also referred to as "padding") to be inserted for shaping the variable to have a constant length.

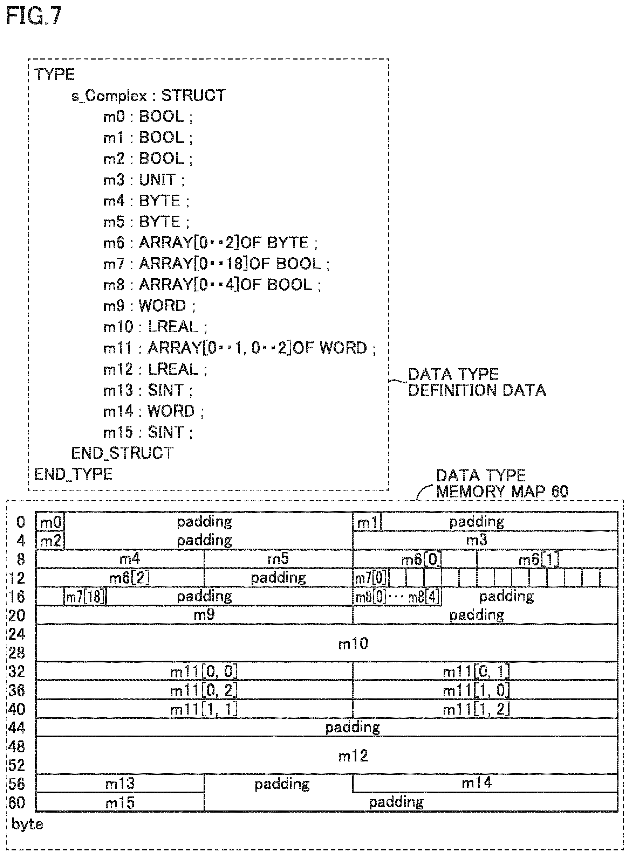

Fig. 7 is a diagram showing an example of the data type memory map of the structure. Fig. 7 shows the data type memory map and the data type definition data of the structure.

In the data type definition data, a variable name and a data type of each member of a structure "s_Complex" are set. The data types of the structure and each member can be freely defined by the user. In the example in Fig. 7, the structure "s_Complex" is constituted of a plurality of members represented by variables "m0" to "m15".

Data type memory map 60 shows the size and the arrangement information of the data type of each member. The memory area storing the variable of the structure "s_Complex" has a size of 64 bytes. Fig. 7 shows 0 bytes to 64 bytes in a manner of being folded every 4 bytes.

According to the data type memory map shown in Fig. 7, the start address and the size of each member can be specified. For example, the data type of the member of variable m0 is BOOL, and the first bit at the top is set as an address of the data. The BOOL-type variable has a size of 2 bytes (16 bits), and 15 bits from the second bit to the sixteenth bit are padding. The data type of the member of variable m1 is also BOOL, and the seventeenth bit is set as an address of the data. Further, 15 bits from the eighteenth bit to the thirty-second bit are padding.

The data type of the member of variable m8 is an array (ARRAY), and has five array elements m8[0] to m8[4] each consisting of BOOL-type data. The start address of array element m8[0] at the first place is the 113-th bit, and the start address of array element m8[4] at the fifth place is the 117-th bit.

In this way, data type memory map 60 of the structure includes information about the start address and the size of each member. Thus, when the value of a structure variable S1 is reproduced by time-series dataset 50, reproduction PLC 40a can specify which bit of the reproduced value of structure variable S1 corresponds to the value of which member, based on the start address and the size of each member indicated in data type memory map 60 shown in Fig. 7. Thereby, reproduction PLC 40a can reproduce the value of any member of the structure.

Although not shown, the data type memory map of the array also includes the size of the data type and the arrangement information of each array element, similarly to the data type memory map of the structure. Therefore, based on the start address and the size of each array element shown in data type memory map 60 of the array, reproduction PLC 40a can specify which bit of the reproduced value of the array variable corresponds to the value of which array element. Thereby, reproduction PLC 40a can reproduce the value of any array element in the array.

### <Reproduction PLC 40a>

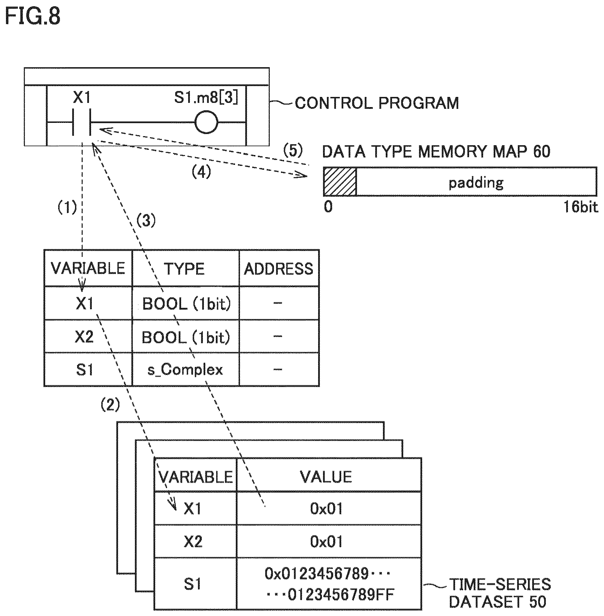

Fig. 8 is a diagram showing the first example of a process of reproducing a variable value by reproduction PLC 40a. Fig. 8 shows a process for reproducing the value of variable X1 used in the control program. The numbers in parentheses in the figure indicate the order of process.

As shown in Fig. 8, reproduction PLC 40a first refers to the data type definition data to acquire the information about the data type of variable X1. The data type of variable X1 is BOOL. Thus, variable X1 has two values of "True" and "False".

Then, reproduction PLC 40a extracts the data at the target time from time-series dataset 50, and acquires the value of variable X1 from the extracted data. The value of variable X1 at the target time is "0x01". Note that "0x01" represents "1" in hexadecimal notation.

Then, reproduction PLC 40a acquires the information about the address and the size of the data of variable X1 by using data type memory map 60 of variable X1. Since the data type of variable X1 is BOOL, a BOOL-type data type memory map (see Fig. 6) is used. It can be seen from the BOOL-type data type memory map that the address of the data of variable X1 is the first bit and has a size of 1 bit.

Then, by using the information acquired from data type memory map 60, reproduction PLC 40a specifies whether variable X1 is "True" or "False" based on the value of variable X1 acquired from time-series dataset 50. In the example in Fig. 8, when the value of variable X1 is "0x01", variable X1 is specified as "True". In this way, the value of variable X1 at the target time is reproduced.

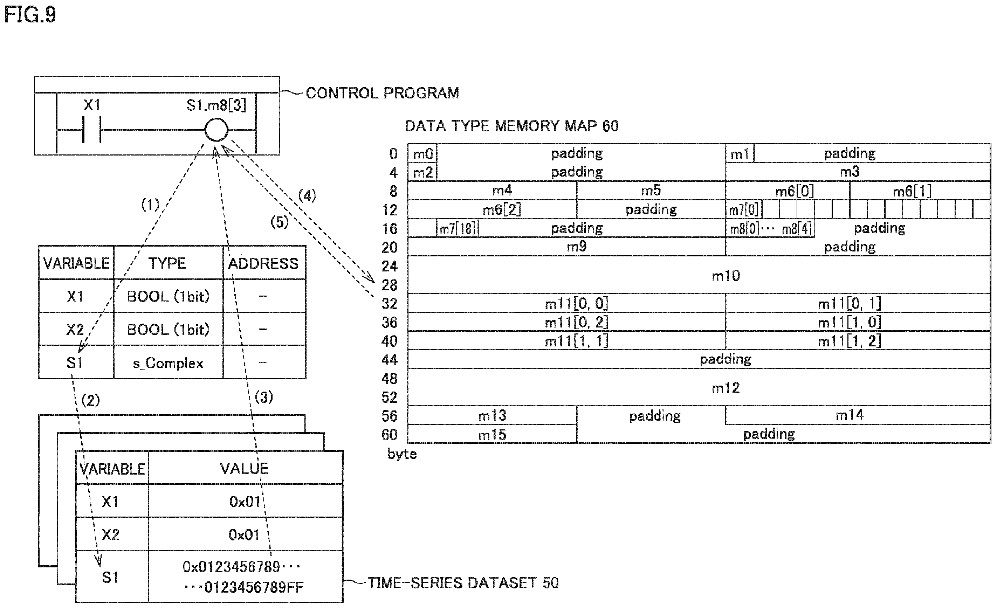

Fig. 9 is a diagram showing the second example of the process of reproducing a variable value by reproduction PLC 40a. Fig. 9 shows a process for reproducing the value of a variable S1.m8[3] used in the control program. The numbers in parentheses in the figure indicate the order of process.

As shown in Fig. 9, reproduction PLC 40a first refers to the data type definition data to acquire the information about the data type of variable S1.m8[3]. As shown in Fig. 7, the data type definition data includes: information indicating that the data type of variable S1 is the structure "s_Complex"; information indicating that m8[3] is one of the members of the structure; and information indicating that a member m8 exists as a data type "ARRAY[0 ·· 4] OF BOOL".

Then, reproduction PLC 40a extracts the data at the target time from time-series dataset 50, and acquires the value of variable S1 from the extracted data. The value of variable S1 at the target time is "0x0123 ···· FF". This value represents the value of the entire structure.

Then, by using data type memory map 60 of variable S1, reproduction PLC 40a acquires the information about the start address and the size of a member m8[3]. Since the data type of variable S1 is a structure s_Complex, data type memory map 60 (see Fig. 7) of structure s_Complex is used. According to data type memory map 60 of this structure s_Complex, it can be seen that the start address of member m8[3] is the 116-th bit and has a size of 1 bit.

Then, by using the information acquired from data type memory map 60, reproduction PLC 40a specifies the value of member m8[3] from the value of variable S1 acquired from time-series dataset 50. Specifically, reproduction PLC 40a reads the value of the 116-th bit from the value of variable S1. In this way, the value of variable S1.m8[3] at the target time is reproduced.

### <Sequence Flow>

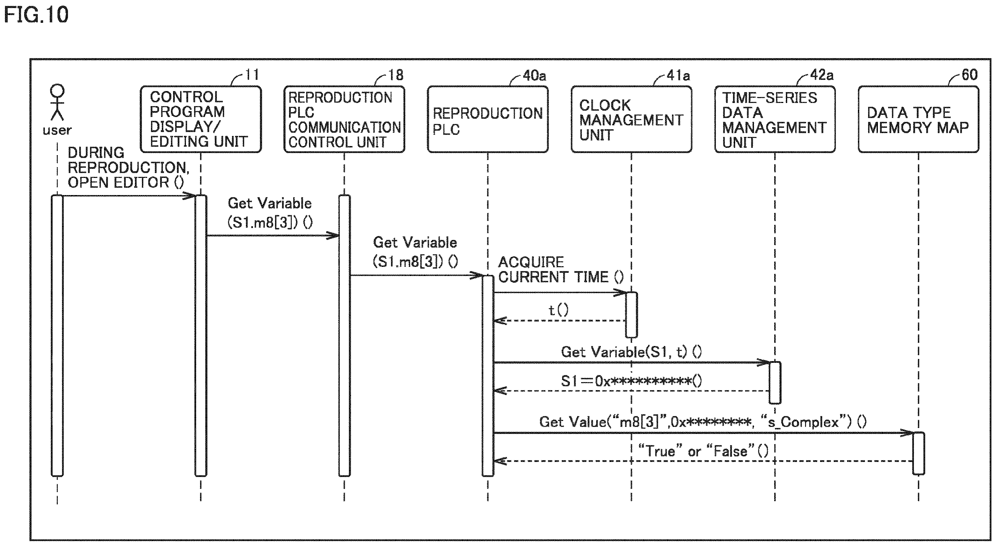

Fig. 10 is a sequence diagram showing a flow of a process of reproducing the value of variable S1.m8[3] shown in Fig. 9. Fig. 10 shows the flow of instructions and data in PC 100A. Before execution of this sequence, in response to the user input for designating the start of the playback mode, the operation of reproduction PLC 40a is started, and reproduction PLC 40a is communicably connected to one or more visualization modules 30.

As shown in Fig. 10, upon receipt of an instruction for the visualization-target variable value from the user during reproduction in the playback mode, control program display/editing unit 11 generates a command for issuing a request for the visualization-target variable value to reproduction PLC 40a. This command can be generated so as to include a name S1.m8[3] of the visualization-target variable value, for example, such as "Get Variable (S1.m8[3])".

Reproduction PLC communication control unit 18 transfers the command "Get Variable (S1.m8[3])" given from control program display/editing unit 11 to reproduction PLC 40a.

Upon receipt of the command "Get Variable (S1.m8[3])" from reproduction PLC communication control unit 18, reproduction PLC 40a sets the time at which the command has been received as current time t. This current time t corresponds to a target time in the target period at which the variable value is to be reproduced.

Clock management unit 41a calculates current time t (i.e., the target time) based on the target counter value from the start of the target period, and sends the information about current time t to reproduction PLC 40a.

Upon receipt of the information about current time t, reproduction PLC 40a then generates a command for acquiring the value of variable S1.m8[3] at current time t from time-series dataset 50. As described above, since the value of structure variable S1 is recorded in time-series dataset 50, a command for acquiring the value of structure variable S1 is generated. This command can be generated so as to include the information about name S1 of the structure variable and current time t, for example, such as "Get Variable (S1, t)".

In response to this command "Get Variable (S1, t)", time-series data management unit 42a extracts data at current time t from time-series dataset 50, and acquires the value of structure variable S1 from the extracted data at current time t. Time-series data management unit 42a transfers the acquired value (0x**********) of structure variable S1 at current time t to reproduction PLC 40a.

When reproduction PLC 40a has acquired the value of structure variable S1 at current time t, it reads the value of member m8[3] from the value of structure variable S1 by using data type memory map 60. Specifically, reproduction PLC 40a generates a command for reading the value of member m8[3]. This command can be generated so as to include: name m8[3] of the member to be reproduced; the value (0x**********) of structure variable S1 at current time t; and data type s_Complex of structure variable S1, for example, such as "Get Value ("m8[3]", 0x*********, "s_Complex")". This command means that it requests the value of the member of m8[3] when the total value of the variables of data type s_Complex is (0x**********).

By referring to data type memory map 60 (see Fig. 7) of the structure in response to this command, the information about the start address and the size of member m8[3] in the structure is acquired. Then, by using the acquired information, reproduction PLC 40a acquires the value of member m8[3] at current time t from the value (0x**********) of structure variable S1 at current time t. Specifically, the information about the start address and the size of member m8 is first acquired from data type memory map 60 of the structure, and, based on the information, the value (0x#####) of member m8 is obtained from the value (0x**********) of the entire variables. Then, the command "Get Value ("[3]", 0x#####, "ARRAY[0 ·· 4] OF BOOL") is executed to specify the value (for example, 0x01) of m8[3]. Finally, by referring to the data type definition data (see Fig. 7) indicating that m8[3] is a BOOL-type variable, member m8[3] is specified as "True" from the value (0x01) of m8[3]. In this way, the value of member m8[3] of structure variable S1 at current time t (the target time) is reproduced.

### <Display Example of Reproduction Data>

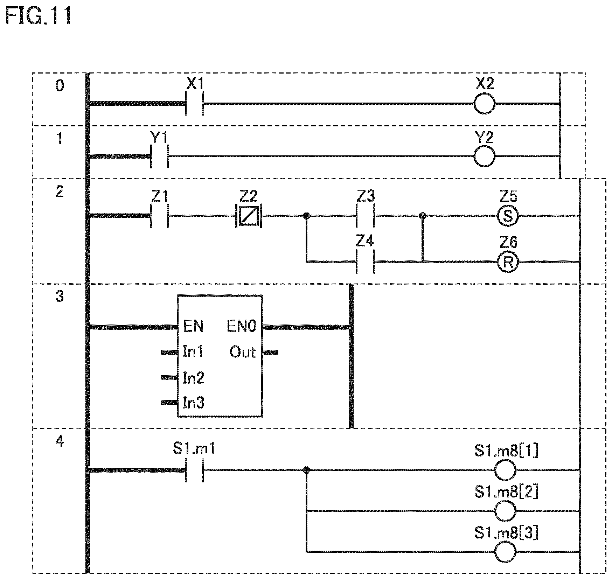

Fig. 11 is a diagram showing a display example of the reproduction data in the playback mode. At least one of one or more visualization modules 30 is configured to generate screen data showing a screen on which visualization-target variable values are described on a ladder diagram representing the control program. This visualization module 30 reproduces the past control state of PLC 200 as shown in Fig. 11. The screen data is generated based on the variable values acquired from time-series dataset 50 by using data type memory map 60. In the example in Fig. 11, the status of execution of the control program by PLC 200 is indicated by thick lines on the ladder diagram.

Although not shown, the sequence shown in Fig. 10 can be applied also in the case where the value of any array element in the control program is reproduced. In other words, upon receipt of an instruction including the variable name of the visualization-target array element from control program display/editing unit 11 through reproduction PLC communication control unit 18, reproduction PLC 40a calculates current time t (i.e., the target time) based on the target counter value, and acquires the value of the array variable at current time t from time-series dataset 50. Then, reproduction PLC 40a refers to data type memory map 60 of the array variable, acquires the information about the start address and the size of the visualization-target array element, and reads the value of the array element from the value of the array variable at current time t by using the acquired information.

Control program display/editing unit 11 is configured to display, in response to the user input, the control program in various scenes, such as a phase in which the control program is created or edited, a phase in which the status of execution of the control program by PLC 200 is monitored in real time, and a phase in which the past control state of PLC 200 is reproduced by reproduction PLC 40a.

In the phase in which the status of execution of the control program by PLC 200 is monitored in real time and the phase in which the past control state of PLC 200 is reproduced, the instructions generated by control program display/editing unit 11 are basically the same and are generated so as to designate the variable to be visualized. However, the destinations to which the instructions are transmitted are different between these two phases. In the phase in which the status of execution of the control program is monitored in real time, the instruction is transmitted to PLC 200. In the phase in which the past control state is reproduced, the instruction is transmitted to reproduction PLC 40a.

Since PLC 200 itself updates each variable value held in memory 206 according to the control cycle, the variable value at the current time at which the instruction is generated can be immediately passed to control program display/editing unit 11. Thereby, visualization module 30 can visualize the current status of execution of the control program.

On the other hand, since reproduction PLC 40a does not have the information of the address of the memory area storing each variable value, the visualization-target variable value cannot be passed to control program display/editing unit 11. Further, reproduction PLC 40a needs to specify the target time corresponding to the current time.

Thus, reproduction PLC 40a acquires time-series dataset 50 in which the variable values held in memory 206 of PLC 200 in the target period are recorded, and causes clock management unit 41a to manage the target counter value, to thereby specify the target time corresponding to the current time in the target time period. Then, it extracts the data corresponding to the target time from time-series dataset 50, reproduces the variable value at the target time from the extracted data by using data type memory map 60, and then passes the reproduced variable value to control program display/editing unit 11. With such a configuration, PC 100A can reproduce the past control state of PLC 200 under the variable programming method.

### §3 Additional Aspects

As described above, the present embodiment includes the following disclosure.

### (Configuration 1)

An information processing system (100, 100A) comprising:
a reproduction module (40, 40a, 101) configured to sequentially reproduce a variable value held in a programmable logic controller (200) for each control cycle of the programmable logic controller (200) in a target period based on a time-series dataset (50) recorded by the programmable logic controller (200) in the target period; and
one or more visualization modules (30, 101) each configured to visualize, as a visualization-target variable value, the variable value reproduced by the reproduction module (40, 40a, 101), the visualization-target variable value representing a control state of the programmable logic controller (200), wherein
the time-series dataset (50) indicates the variable value for each the control cycle in the target period,
the reproduction module (40, 40a, 101) has a data type memory map (60) representing:
   a size of a data type of a variable used by a control program executed by the programmable logic controller (200);
   a size of a data type of each array element in an array or each member in a structure; and
   arrangement information of an array element or a member, and
the reproduction module (40, 40a, 101) is configured to reproduce, by using the data type memory map (60), the variable value held in the programmable logic controller (200).

### (Configuration 2)

The information processing system (100, 100A) according to Configuration 1, wherein
the reproduction module (40, 40a, 101) is configured to
extract data corresponding to a target time in the target period from the time-series dataset (50), and reproduce a value of a structure variable held in the programmable logic controller (200) at the target time based on the extracted data, and
specify a start address and a size of a visualization-target member in the structure by using the data type memory map (60), to reproduce a value of the visualization-target member from the reproduced value of the structure variable.

### (Configuration 3)

The information processing system according to Configuration 1 or 2, wherein
the reproduction module (40, 40a, 101) is configured to
extract data corresponding to a target time in the target period from the time-series dataset (50), and reproduce a value of an array variable held in the programmable logic controller at the target time based on the extracted data, and
specify a start address and a size of a visualization-target array element in an array by using the data type memory map (60), to reproduce a value of the visualization-target array element from the reproduced value of the array variable.

### (Configuration 4)

The information processing system (100, 100A) according to any one of Configurations 1 to 3, wherein
the one or more visualization modules (30) each have:
   a first mode for acquiring, as the visualization-target variable value, the variable value reproduced by the reproduction module (40, 40a, 101); and
   a second mode for acquiring, as the visualization-target variable value, a variable value currently held in the programmable logic controller, and
the information processing system (100, 100A) is configured to
   communicably connect the one or more visualization modules (30) and the reproduction module (40, 40a, 101) in response to an instruction to start the first mode, and
   communicably connect the one or more visualization modules (30) and the programmable logic controller (200) in response to an instruction to start the second mode.

### (Configuration 5)

An information processing method in an information processing apparatus including one or more visualization modules (30) each configured to visualize a visualization-target variable value representing a control state of a programmable logic controller (200), the information processing method comprising:
sequentially reproducing a variable value held in the programmable logic controller (200) for each control cycle of the programmable logic controller (200) in a target period based on a time-series dataset (50) recorded by the programmable logic controller (200) in the target period; and
sending the reproduced variable value to the one or more visualization modules (30) as the visualization-target variable value, wherein
the time-series dataset (50) indicates the variable value for each the control cycle in the target period,
the information processing apparatus has a data type memory map (60) representing:
   a size of a data type of a variable used by a control program executed by the programmable logic controller (200); and
   a size of a data type and arrangement information of an array element in an array variable or a member in a structure variable, and
the sequentially reproducing a variable value includes reproducing, by using the data type memory map (60), the variable value held in the programmable logic controller (200).

### (Configuration 6)

A program for causing a computer (100A) to execute an information processing method, the computer (100A) including one or more visualization modules (30) each configured to visualize a visualization-target variable value representing a control state of a programmable logic controller (200),
the information processing method comprising:
sequentially reproducing a variable value held in the programmable logic controller (200) for each control cycle of the programmable logic controller (200) in a target period based on a time-series dataset (50) recorded by the programmable logic controller (200) in the target period; and
sending the reproduced variable value to the one or more visualization modules (30) as the visualization-target variable value, wherein
the time-series dataset (50) indicates the variable value for each the control cycle in the target period,
the computer (100A) has a data type memory map (60) representing:
   a size of a data type of a variable used by a control program executed by the programmable logic controller (200); and
   a size of a data type and arrangement information of an array element in an array variable or a member in a structure variable, and
the sequentially reproducing a variable value includes reproducing, by using the data type memory map (60), the variable value held in the programmable logic controller (200).

Although the embodiments of the present disclosure have been described, it should be understood that the embodiments disclosed herein are illustrative and non-restrictive in every respect. The scope of the present disclosure is defined by the terms of the claims and is intended to include any modifications within the scope and meaning equivalent to the terms of the claims.

### REFERENCE SIGNS LIST

1 manufacturing system, 11 control program display/editing unit, 12 data type definition editing unit, 13 data type memory map generation unit, 14 sampling setting unit, 15 build processing unit, 16 reproduction PLC generation unit, 17 PLC communication control unit, 18 reproduction PLC communication control unit, 19 data accessor, 21 program execution unit, 22 data collection unit, 30 visualization module, 40 reproduction module, 40a reproduction PLC, 41 time control module, 41a clock management unit, 42 controller control state reproduction function, 42a management unit, 43 look-up table, 45 time designation module, 45a reproduction PLC clock operation unit, 50 time-series dataset, 60 data type memory map, 100 information processing system, 100A PC, 101 processor, 102, 206 memory, 103, 208 storage, 104 input interface, 105 display controller, 106 communication interface, 107, 270 reader/writer, 110 input device, 120 display, 131 development program, 132 viewer program, 133 reproduction program, 200 PLC, 201 power supply circuit, 202 CPU, 204 chipset, 211 system program, 213 scheduler program, 214 program dataset, 250 USB controller, 252 field network controller, 252a, 254a connector, 254 network controller, 260 timer, 300 field device, 400 network camera, 500 network storage, 600 storage medium.

## Claims

1. An information processing system comprising:
a reproduction module configured to sequentially reproduce a variable value held in a programmable logic controller for each control cycle of the programmable logic controller in a target period based on a time-series dataset recorded by the programmable logic controller in the target period; and
one or more visualization modules each configured to visualize, as a visualization-target variable value, the variable value reproduced by the reproduction module, the visualization-target variable value representing a control state of the programmable logic controller, wherein
the time-series dataset indicates the variable value for each the control cycle in the target period,
the reproduction module has a data type memory map representing:
a size of a data type of a variable used by a control program executed by the programmable logic controller;
a size of a data type of each array element in an array or each member in a structure; and
arrangement information of an array element or a member, and
the reproduction module is configured to reproduce, by using the data type memory map, the variable value held in the programmable logic controller.

2. The information processing system according to claim 1, wherein
the reproduction module is configured to
extract data corresponding to a target time in the target period from the time-series dataset, and reproduce a value of a structure variable held in the programmable logic controller at the target time based on the extracted data, and
specify a start address and a size of a visualization-target member in the structure by using the data type memory map, to reproduce a value of the visualization-target member from the reproduced value of the structure variable.

3. The information processing system according to claim 1, wherein
the reproduction module is configured to
extract data corresponding to a target time in the target period from the time-series dataset, and reproduce a value of an array variable held in the programmable logic controller at the target time based on the extracted data, and
specify a start address and a size of a visualization-target array element in an array by using the data type memory map, to reproduce a value of the visualization-target array element from the reproduced value of the array variable.

4. The information processing system according to any one of claims 1 to 3, wherein
the one or more visualization modules each have:
a first mode for acquiring, as the visualization-target variable value, the variable value reproduced by the reproduction module; and
a second mode for acquiring, as the visualization-target variable value, a variable value currently held in the programmable logic controller, and
the information processing system is configured to
communicably connect the one or more visualization modules and the reproduction module in response to an instruction to start the first mode, and
communicably connect the one or more visualization modules and the programmable logic controller in response to an instruction to start the second mode.

5. An information processing method in an information processing apparatus including one or more visualization modules each configured to visualize a visualization-target variable value representing a control state of a programmable logic controller, the information processing method comprising:
sequentially reproducing a variable value held in the programmable logic controller for each control cycle of the programmable logic controller in a target period based on a time-series dataset recorded by the programmable logic controller in the target period; and
sending the reproduced variable value to the one or more visualization modules as the visualization-target variable value, wherein
the time-series dataset indicates the variable value for each the control cycle in the target period,
the information processing apparatus has a data type memory map representing:
a size of a data type of a variable used by a control program executed by the programmable logic controller; and
a size of a data type and arrangement information of an array element in an array variable or a member in a structure variable, and
the sequentially reproducing a variable value includes reproducing, by using the data type memory map, the variable value held in the programmable logic controller.

6. A program for causing a computer to execute an information processing method, the computer including one or more visualization modules each configured to visualize a visualization-target variable value representing a control state of a programmable logic controller,
the information processing method comprising:
sequentially reproducing a variable value held in the programmable logic controller for each control cycle of the programmable logic controller in a target period based on a time-series dataset recorded by the programmable logic controller in the target period; and
sending the reproduced variable value to the one or more visualization modules as the visualization-target variable value, wherein
the time-series dataset indicates the variable value for each the control cycle in the target period,
the computer has a data type memory map representing:
a size of a data type of a variable used by a control program executed by the programmable logic controller; and
a size of a data type and arrangement information of an array element in an array variable or a member in a structure variable, and
the sequentially reproducing a variable value includes reproducing, by using the data type memory map, the variable value held in the programmable logic controller.
